# FASCICULE DE BREVET EUROPEEN

(11) **EP 2 602 462 B1**
(45) Date de publication et mention de la délivrance du brevet: **04.01.2017**
(21) Numéro de dépôt: 12194111.6
(22) Date de dépôt: 23.11.2012
(51) Int. Cl.: F02D 41/02, F01N 3/021

(54) **Procédé amélioré de limitation des émissions polluantes d'un moteur à combustion interne**
Reduzierung der Emissionen des Verbrennungsmotors
Improved method for pollutant emissions reduction in an internal combustion engine

(30) Priorité: 09.12.2011 FR 1161435
(43) Date de publication de la demande: 12.06.2013
(73) Titulaire: PEUGEOT CITROËN AUTOMOBILES SA, 78140 Vélizy-Villacoublay (FR)
(72) Inventeur: Matthess, Nils, 92300 LEVALLOIS PERRET (FR); Bertin, Thierry, 92250 LA GARENNE COLOMBES (FR)

(56) Documents cités:
- EP-A2- 1 028 235
- WO-A1-2011/044967
- DE-A1-102007 056 102
- FR-A1- 2 923 531
- JP-A- 2010 031 799

## Description

La présente invention concerne un procédé amélioré de limitation des émissions polluantes d'un moteur à combustion interne, notamment de type Diesel.

Malgré l'optimisation du fonctionnement des moteurs à combustion interne, et plus particulièrement des moteurs de type diesel, les moteurs génèrent des émissions polluantes consistant notamment en l'émission de particules solides polluantes ou suies produites lors de la combustion incomplète dans le moteur. Il est connu de piéger ces particules présentes dans les gaz d'échappement par l'implantation dans la ligne d'échappement, en aval des chambres de combustion du moteur, d'un filtre à particules.

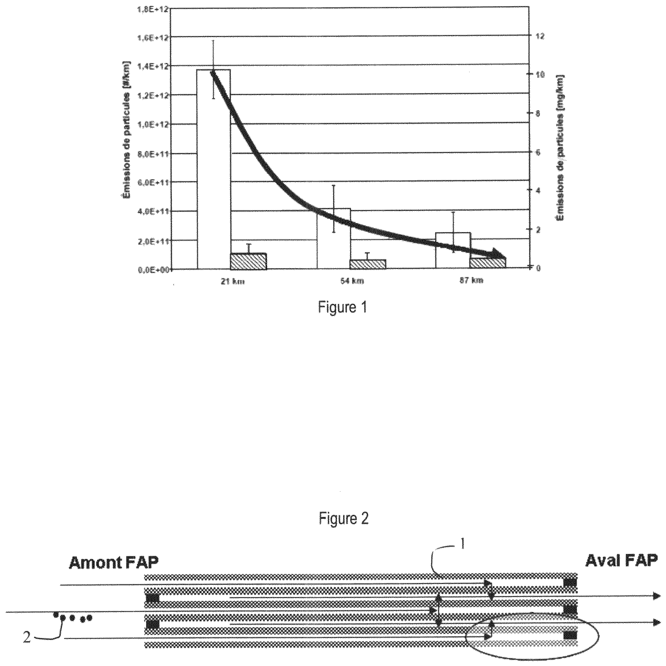

Un tel filtre à particules, tel qu'illustré sur la figure 2, est conçu de façon à pouvoir retenir les particules sur des parois poreuses superposées 1 entre lesquelles est interposé un tampon 3 formant bouchon, les tampons 3 et les parois poreuses 1 forçant le gaz à traverser les différentes parois dans leurs épaisseurs, afin d'en retenir les particules solides de diamètres supérieurs aux pores de ces parois.

Il existe principalement deux sortes de filtres à particules :
- un filtre à particules additivé, qui est un filtre à particules du même type que décrit ci-dessus associé à un additif d'aide à la régénération qui est mélangé au carburant et qui permet de réduire la température à laquelle les suies peuvent être oxydées et donc éliminées, i.e. aux alentours de 450°C, et
- un filtre à particules catalysé qui est un filtre à particules additivé de métaux précieux comme le platine sous la forme d'une phase active qui est elle-même déposée sur et/ou dans les parois poreuses d'un filtre à particules, ces métaux précieux ayant pour but d'oxyder les suies et par conséquent de les éliminer, quand la température le permet, soit aux environs de 550 - 650°C.

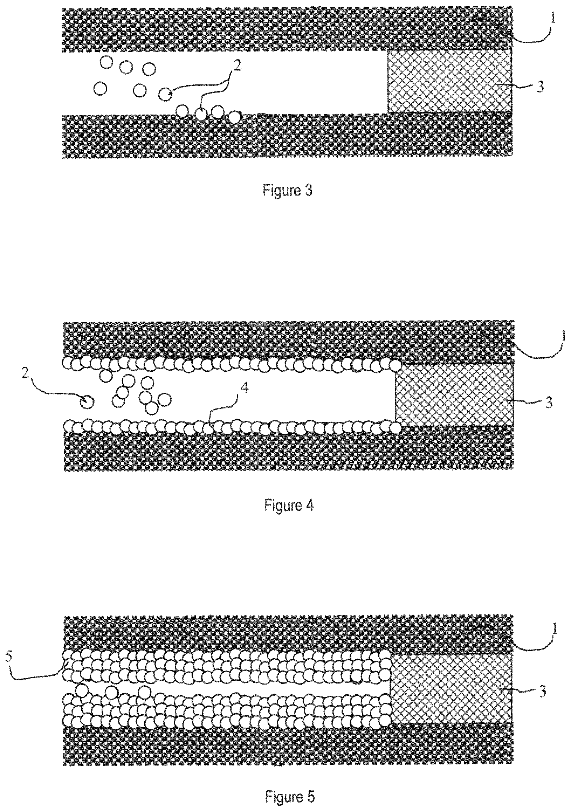

Au fur et à mesure de l'utilisation du moteur, tel qu'illustré sur les figures 3 à 5, les particules s'accumulent dans le filtre sous la forme d'une couche épaisse de quelques microns 5 illustrée sur la figure 5 et finissent par entraîner une contre-pression importante à l'échappement du moteur, ainsi qu'une augmentation de la pression différentielle aux bornes du filtre à particules, ce qui diminue considérablement les performances du moteur. Afin de rétablir les performances du moteur, on pratique une régénération du filtre à particules par combustion des particules qui s'y sont accumulées.

Un inconvénient d'un tel dispositif provient du fait qu'après la régénération du filtre à particules, il est constaté que le filtre laisse passer les particules solides pendant environ 10 minutes.

Les émissions de particules en nombre (PN) augmentent alors fortement et le retour à des niveaux d'émission, acceptables ne se fait qu'au bout de plusieurs dizaines de kilomètres de fonctionnement du moteur comme l'illustre le graphique de la figure 1 mettant en évidence l'émission d'environ 1,4.1012 particules par kilomètre par le moteur à environ 21 km après régénération, alors que le seuil réglementaire acceptable est seulement de 6.1011 particules par kilomètre. Pendant cette période, la filtration n'est donc pas correctement assurée.

Pour pallier cet inconvénient, le document FR 2 923 531 préconise de ne faire qu'une régénération partielle, suite à laquelle subsiste toujours une couche de suie d'une épaisseur certaine, mais cette solution conduit à effectuer davantage de régénérations plus courtes, ce qui augmente les risques de surconsommation du moteur et de dilution d'huile.

Une solution serait de réduire encore la porosité des parois du filtre (de 18 à 9 microns par exemple), avec malheureusement pour conséquence une augmentation de la contre-pression à l'échappement et donc un impact sur la performance du moteur (dont la consommation de carburant).

On connait encore le document JP2010031799A correspondant au préambule de la revendication 1.

L'invention a pour but de pallier ces inconvénients.

A cet effet, l'invention concerne un procédé de diminution des émissions polluantes d'une ligne d'échappement d'un moteur à combustion interne d'un véhicule notamment automobile, munie d'un filtre à particules, comprenant une étape de filtration des particules solides contenues dans les émissions polluantes par le filtre à particules, le filtre étant, lors du fonctionnement normal du moteur, recouvert d'une couche de particules solides permettant elle-même la filtration des particules solides les plus fines (dont le diamètre est alors inférieur au diamètre moyen des pores) ayant une action bénéfique pour la filtration, et au bout d'une durée de fonctionnement plus longue, d'une couche de particules solides plus épaisse entraînant une contrepression à l'échappement du moteur qui en dégrade les performances, le procédé comprenant une étape de régénération du filtre recouvert par la couche dite « néfaste » car trop épaisse, consistant à éliminer cette couche « néfaste » dans sa totalité.

On comprend par couche ayant une action bénéfique la couche qui se forme progressivement à partir des parois du filtre jusqu'à une épaisseur de l'ordre de 2 à 3 microns. Cette couche est favorable à la filtration, comme expliqué plus haut. Ensuite, la couche continue de s'épaissir jusqu'à une épaisseur de l'ordre de 100 à 150 microns, et cette épaisseur de couche au-delà de 2 à 3 microns devient néfaste : quand cette couche atteint une épaisseur seuil de l'ordre de 100 à 150 microns, elle engendre une contre-pression trop importante, qui déclenche la nécessité de faire une régénération du filtre.

Le caractère trop épais de cette couche néfaste correspond donc à l'épaisseur seuil au-delà de laquelle la régénération est déclenchée, bien au-delà de l'épaisseur de la première couche favorable. Elle est estimée en fonction de la variation de la différence de pression entre l'aval et l'amont du filtre (on comprend aval et amont en fonction de la direction générale d'écoulement des gaz d'échappement dans le filtre).

Toutes choses égales par ailleurs, pour un filtre donné, on a en effet une corrélation entre une différence de pression amont/aval du filtre et une épaisseur de couche sur les parois du filtre : on peut donc en mesurant ou en estimant cette différence de pression en déduire l'épaisseur de couche de particules (qu'on appelle aussi « gâteau) sur les parois du filtre, et détecter quand on dépasse l'épaisseur seuil.

Naturellement, cette corrélation entre épaisseur de couche et différence de pression amont/aval dépend des caractéristiques du filtre, notamment de son dimensionnement (volume, longueur ...) : l'homme du métier établit, par exemple sur banc d'essai, la corrélation pour chaque filtre donné.

La mesure de la différence de pression peut se faire avec un ou deux capteurs de pression.

Le procédé comprend encore une étape de formation accélérée de la couche bénéfique de particules solides, mise en oeuvre sur le filtre vierge de toute particule, cette formation accélérée comprenant une étape de formation d'un agrégat composé de noyaux de carbone et d'hydrocarbures imbrûlés, dit particules grasses, définie par une phase d'augmentation du nombre de noyaux de carbone et d'hydrocarbures imbrûlés produits par le moteur.

Selon l'invention, la phase d'augmentation d'hydrocarbures imbrûlés dans la ligne d'échappement comprend l'action de court-circuiter temporairement un catalyseur d'oxydation situé en amont du filtre à particules dans le sens d'évacuation des émissions du moteur.

Selon une caractéristique de l'invention, la formation accélérée de la couche fine de particules solides est mise en oeuvre lors de la première utilisation du filtre.

Selon une autre caractéristique de l'invention, la formation accélérée de la couche fine de particules solides est mise en oeuvre sur le filtre immédiatement après l'étape de régénération du filtre.

Selon encore une autre caractéristique, la phase d'augmentation du nombre de noyaux de carbone produits par le moteur comprend l'une et/ou l'autre des actions suivantes :
- réaliser une post-injection à froid de carburant dans la chambre de combustion,
- augmenter le taux de gaz recirculés dans le moteur,
- dégrader l'avance d'injection.

Selon encore une autre caractéristique, la phase d'augmentation d'hydrocarbures imbrûlés dans la ligne d'échappement comprend l'une et/ou l'autre des actions suivantes :
- post-injecter du carburant dans le moteur, et
- dégrader la combustion.

Selon encore une autre caractéristique, le procédé comprend une étape de contrôle du nombre de particules solides émises en aval du filtre à particules par un capteur de particules positionné en aval du filtre à particules, permettant de déclencher ou stopper la formation accélérée de la couche bénéfique de suies.

L'invention sera mieux comprise, et d'autres buts, caractéristiques, détails et avantages de celle-ci apparaîtront plus clairement à la lumière de la description explicative qui va suivre, faite en référence aux dessins schématiques annexés donnés uniquement à titre d'exemple illustrant plusieurs modes de réalisation de l'invention et dans lesquels :
- la figure 1 précitée illustre l'évolution des émissions de particules en nombre (histogrammes à fond blanc, unité en nombre de particules.km-1) et en masse (histogrammes à fond hachuré, unité en mg.km-1) en fonction du nombre de kilomètres parcourus par le véhicule après une régénération du filtre à particules de ce véhicule ;
- la figure 2 citée précédemment représente schématiquement, selon une coupe transversale, un filtre à particules à parois poreuses, filtrant les émissions d'un moteur à combustion interne ;
- les figure 3 à 5 illustrent schématiquement des agrandissements du filtre de la figure 2 montrant le dépôt progressif des particules solides sur les parois poreuses de ce filtre ;
- la figure 6 représente schématiquement la constitution de la suie se déposant sur les parois du filtre des figures 3 à 5 ; et
- la figure 7 illustre schématiquement la formation des particules de suie de la figure 6.

L'invention a pour but de réduire les émissions de particules en nombre, notamment après la régénération d'un filtre à particules ou lors de la première utilisation d'un filtre neuf.

En effet, il a été constaté, qu'il s'agisse d'un filtre additivé ou catalysé, que la couche de suie de quelques microns 4 qui se forme sur les parois poreuses du filtre à particules lors du fonctionnement normal du moteur, telle que représentée sur la figure 4, améliore son efficacité de filtration.

Cette couche de suie relativement fine qui agit comme un filtre supplémentaire des particules les plus fines (diamètres inférieurs au diamètre moyen des pores de la paroi filtrante) qui elles-mêmes contribuent le plus au nombre de particules détectées est donc bénéfique pour la filtration.

Malheureusement, lorsqu'une régénération du filtre à particules s'est produite, cette couche de suies bénéfique a été "consommée", c'est-à-dire totalement éliminée, et l'efficacité de filtration en est significativement dégradée (voir figure 1).

Et, tel que l'illustre la figure 1, la limite réglementaire en masse de particules de 4.5mg/km est alors certes satisfaite, mais celle en nombre de 6.1011 particules/km est largement dépassée (voir premier histogramme à fond blanc qui culmine à environ 1,4.1012 particules par kilomètre parcouru par le véhicule). Ainsi, lorsque qu'une régénération vient de se produire ou lorsque le filtre à particules est neuf, la couche de suies bénéfique n'est plus présente pour assurer la filtration notamment des particules les plus fines qui contribuent le plus au nombre de particules détectées.

Bien évidemment, ce maximum de 1,4.1012 particules détectées immédiatement après régénération baisse ensuite pour retrouver des niveaux conformes aux réglementations, tel que l'illustre la courbe en traits gras de la figure 1. Malheureusement, ce retour à la normale ne se fait pas immédiatement car la couche de suies bénéfique ne réapparaît pas instantanément sur les parois du filtre à particules dans un procédé de gestion du filtre classique.

En outre, la formation de la couche de suie dépend des conditions de fonctionnement du moteur. Par exemple, si la température dans la chambre de combustion dépasse nettement la température de combustion des suies (450°C dans le cas d'un filtre additivé ou 550 - 650°C dans le cas d'un filtre catalysé), les suies se sont à peine déposées en surface qu'elles sont immédiatement oxydées et transformées principalement en CO2 et en H2O sans pouvoir donc constituer la couche filtrant les particules fines. C'est le cas de la conduite sur autoroute, par exemple. La couche de suies filtrante mettra dans ce cas plus de temps pour se reconstituer.

De même, en injection directe essence (IDE), le filtre à particules disposé après un catalyseur trois-voies ou directement après un collecteur émissions, réduit, certes, les émissions de particules mais doit encore être optimisé pour respecter une limite commune IDE/Diesel en nombre (6.1011 particules/km). En effet, en IDE, les températures dans la chambre de combustion significativement supérieures à la température de combustion des suies et la présence d'oxygène dans la chambre à chaque levée de pied entrainent une régénération du filtre de manière quasi-continue, ce qui ne laisse pas le temps à la couche de suies de participer à la filtration des émissions.

L'invention consiste à reformer en accéléré une couche filtrante immédiatement après régénération du filtre à particules ou lors de la première utilisation d'un filtre neuf.

Cette accélération peut être obtenue de diverses manières qui ont toutes le même objectif : accroître la richesse du moteur pour créer des zones de sur-richesse dans la chambre de combustion, et former ainsi des suies en nombre.

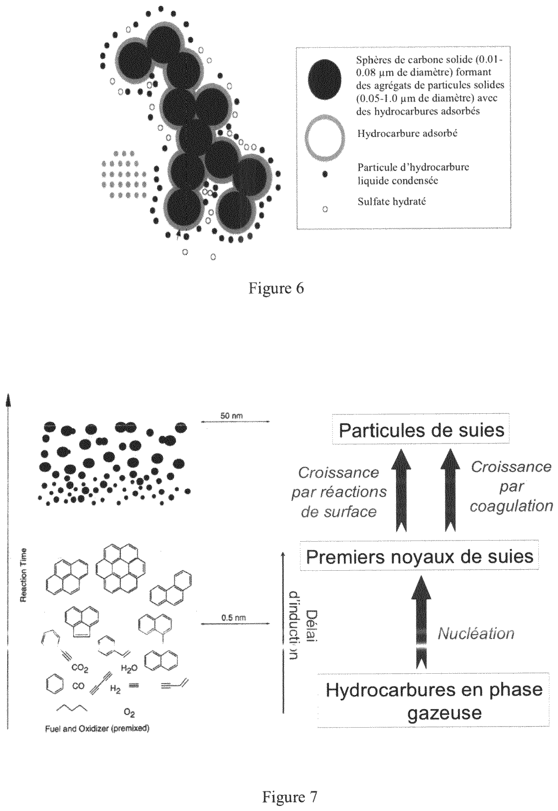

Ces deux opérations aboutissent à l'émission d'une quantité importante de particules et d'hydrocarbures « gras » qui vont former rapidement dans le filtre à particules une couche de suies filtrante et améliorer son efficacité en filtration. Il s'agit, comme l'illustrent les figures 6 et 7, de particules constituées d'un noyau de carbone (fraction organique insoluble) généré dans la chambre de combustion, sur lequel se condensent différents produits tout au long de la ligne d'échappement. Ces produits sont de l'eau, des sulfates/nitrates, mais surtout des hydrocarbures imbrûlés présents dans les gaz d'échappement (fraction organique soluble dont l'acronyme anglais est SOF).

Pour accélérer le phénomène de constitution de cette couche de suies, il peut être intéressant de faire « fumer le moteur ». Cela peut être obtenu de différentes manières sachant que l'idée principale est d'augmenter la richesse du mélange air/carburant générant une augmentation de la formation de noyaux de carbone dans la chambre de combustion.

A cet effet, il est possible :
- de réaliser une post-injection à froid de carburant dans la chambre de combustion,
- d'augmenter fortement le taux d'EGR (gaz d'échappement recirculés ou recyclés dans le moteur),ainsi, en diminuant la pression partielle en oxygène dans la chambre de combustion, il est possible d'augmenter temporairement les émissions de particules,
- de dégrader l'avance à l'injection, c'est-à-dire de retarder l'injection de carburant afin de dégrader sa combustion (i.e. combustion incomplète du mélange air/carburant), les émissions de particules augmentant pendant cette phase.

La post-injection à froid comme l'augmentation significative du taux d'EGR ou la dégradation d'avance engendrent des surémissions de particules, puis d'hydrocarbures imbrûlés « gras » dans la ligne d'échappement, qui vont accélérer la construction de la couche de suies filtrante.

Ainsi, selon l'invention, on réalise, après chaque régénération du filtre (détectée par exemple par les capteurs de pressions (DeltaP) positionnés de part et d'autre du filtre à particules) ou lors de la première utilisation d'un filtre neuf :
- soit une post-injection de carburant dans la chambre de combustion si la température du liquide de refroidissement est inférieure à 80°C,
- soit une augmentation forte du taux d'EGR ou une dégradation de l'avance si la température du liquide de refroidissement est supérieure à 80°C.

Et pour constituer ensuite les particules grasses qui permettent une formation rapide d'une couche de suies filtrante, il est possible :
1/ de court-circuiter temporairement le catalyseur d'oxydation (DOC) situé en amont du filtre à particules. En effet, ce catalyseur oxyde les hydrocarbures imbrûlés et limite donc leur condensation sur les noyaux de carbone qui forment alors uniquement des suies "sèches" moins aptes à former rapidement une couche de suies filtrante. Le court-circuit du DOC permet donc de fabriquer des suies grasses le temps de constituer rapidement la couche de suies filtrante ;
2/ de générer par exemple un plus grand nombre de particules (points de fonctionnement moteur dans la "carto fumées") et dans le même temps, augmenter la quantité d'hydrocarbures imbrûlés dans les gaz d'échappement, par exemple en post-injectant du carburant ou en dégradant la combustion afin d'augmenter la part de fraction organique soluble des suies générées.

Ces opérations doivent être optimisées pour que l'on détermine au préalable leur durée.

Il est nécessaire de trouver le bon compromis entre la durée de la formation accélérée d'une couche de particules d'épaisseur suffisante pour améliorer l'efficacité de filtration, et la durée existant entre deux régénérations. Il ne faudrait pas en effet que cette solution augmente la fréquence de régénération car ces dernières augmentent le risque de dilution du carburant post-injecté dans l'huile de lubrification (risque casse moteur par défaut de lubrification), ce qui n'est pas souhaitable pour la durabilité du moteur. Ceci-étant, le risque de modifier la durée entre deux régénérations est faible car l'épaisseur de la couche filtrante à atteindre pour améliorer la filtration est également très faible (quelques microns) et ne représentera donc qu'un temps très court pour se constituer.

Dans le cas où un capteur particules est positionné en aval du filtre à particules, il est possible de contrôler ces opérations de manière plus précise et de les déclencher comme de les stopper grâce à lui.

Le procédé selon l'invention peut être mis en oeuvre au sein des différentes configurations suivantes :
- un moteur Diesel équipé en sortie échappement dans l'ordre d'un catalyseur d'oxydation, d'un catalyseur de conversion des oxydes d'azote (DENOx) soit par réduction sélective (SCR) soit par piégeage et traitement des NOx (PANOx), d'un capteur DeltaP, d'un filtre à particules (additivé ou catalysé), d'un capteur DeltaP et d'un capteur de suies.
- un moteur Diesel équipé en sortie échappement dans l'ordre d'un piège à oxydes d'azote (NOx), d'un capteur DeltaP, d'un filtre à particules (additivé ou catalysé), d'un capteur DeltaP et d'un capteur de suies.
- un moteur Diesel équipé en sortie échappement dans l'ordre d'un catalyseur d'oxydation, d'un catalyseur DENOx (SCR ou PANOx), d'un capteur DeltaP, d'un filtre à particules (additivé ou catalysé), d'un capteur DeltaP.
- un moteur Diesel équipé en sortie échappement dans l'ordre d'un piège à NOx, d'un capteur DeltaP, d'un filtre à particules (additivé ou catalysé) et d'un capteur DeltaP.
- un moteur Diesel équipé en sortie échappement dans l'ordre d'un catalyseur d'oxydation, d'un capteur DeltaP, d'un filtre à particules (additivé ou catalysé), d'un capteur DeltaP et d'un capteur de suies.
- un moteur Diesel équipé en sortie échappement dans l'ordre d'un catalyseur d'oxydation, d'un capteur DeltaP, d'un filtre à particules (additivé ou catalysé) et d'un capteur DeltaP.
- un moteur Diesel équipé en sortie échappement dans l'ordre d'un catalyseur d'oxydation, d'un capteur DeltaP, d'un filtre à particules contenant une imprégnation DENOx, d'un capteur DeltaP et d'un capteur de suies.
- un moteur Diesel équipé en sortie échappement dans l'ordre d'un catalyseur d'oxydation, d'un capteur DeltaP, d'un filtre à particules contenant une imprégnation DENOx et d'un capteur DeltaP.

## Revendications

1. Procédé de diminution des émissions polluantes d'une ligne d'échappement d'un moteur à combustion interne d'un véhicule notamment automobile, munie d'un filtre à particules, comprenant une étape de filtration des particules solides contenues dans les émissions polluantes par le filtre à particules, le filtre étant, lors du fonctionnement normal du moteur, recouvert d'une couche de particules solides permettant elle-même la filtration des particules solides les plus fines ayant une action bénéfique pour la filtration, et au bout d'une durée de fonctionnement plus longue, d'une couche de particules solides plus épaisse entraînant une contrepression à l'échappement du moteur qui en dégrade les performances, le procédé comprenant une étape de régénération du filtre recouvert par la couche dite « néfaste » car trop épaisse, consistant à éliminer cette couche « néfaste » dans sa totalité, une étape de formation accélérée de la couche bénéfique (4) de particules solides (2), mise en oeuvre sur le filtre (1) vierge de toute particule, cette formation accélérée comprenant une étape de formation d'un agrégat composé de noyaux de carbone et d'hydrocarbures imbrûlés, dit "particule grasse", définie par une phase d'augmentation du nombre de noyaux de carbone et d'hydrocarbures imbrûlés produits par le moteur, **caractérisé en ce que** la phase d'augmentation d'hydrocarbures imbrûlés dans la ligne d'échappement comprend l'action de court-circuiter temporairement un catalyseur d'oxydation situé en amont du filtre à particules dans le sens d'évacuation des émissions du moteur.

2. Procédé selon la revendication 1, **caractérisé en ce que** la formation accélérée de la couche fine (4) de particules solides (2) est mise en oeuvre lors de la première utilisation du filtre.

3. Procédé selon la revendication 1 ou 2, **caractérisé en ce que** la formation accélérée de la couche fine (4) de particules solides (2) est mise en oeuvre sur le filtre immédiatement après l'étape de régénération du filtre.

4. Procédé selon l'une des revendications précédentes, **caractérisé en ce que** la phase d'augmentation du nombre de noyaux de carbone produits par le moteur comprend l'une et/ou l'autre des actions suivantes :
- réaliser une post-injection à froid de carburant dans la chambre de combustion,
- augmenter le taux de gaz recirculés dans le moteur,
- dégrader l'avance à l'injection.

5. Procédé selon l'une des revendications précédentes, **caractérisé en ce que** la phase d'augmentation d'hydrocarbures imbrûlés dans la ligne d'échappement comprend l'une et/ou l'autre des actions suivantes :
- post-injecter du carburant dans le moteur, et
- dégrader la combustion.

6. Procédé selon l'une des revendications précédentes, **caractérisé en ce qu'**il comprend une étape de contrôle du nombre de particules solides émises en aval du filtre à particules par un capteur de particules positionné en aval du filtre à particules, permettant de déclencher ou stopper la formation accélérée de la couche bénéfique de suies, évitant la surconsommation de carburant et l'augmentation du risque dilution d'huile.

## Patentansprüche

1. Verfahren zur Verringerung der Schadstoffemissionen einer Auspuffleitung eines Innenverbrennungsmotors eines Fahrzeugs, vor allem eines Kraftfahrzeugs, die mit einem Partikelfilter versehen ist, einen Schritt zur Filterung der Feststoffpartikel, die in den Schadstoffemissionen enthalten sind, durch den Partikelfilter umfassend, wobei der Filter bei Normalbetrieb des Motors mit einer Schicht von Feststoffpartikeln bedeckt ist, die selbst die Filterung der feinsten Feststoffpartikel ermöglicht, die eine positive Auswirkung auf die Filterung haben, und nach einer längeren Betriebsdauer mit einer dickeren Schicht von Feststoffpartikeln, die für einen Gegendruck gegenüber dem Auslass des Motors sorgen, welcher die Leistungen abschwächt, wobei das Verfahren einen Schritt zur Regeneration des Filters umfasst, der von der "schädlich" genannten, weil zu dicken Schicht bedeckt ist, welcher darin besteht, diese "schädliche" Schicht in ihrer Gesamtheit zu eliminieren, einen Schritt zur beschleunigten Bildung der positiven Schicht (4) von Feststoffpartikeln (2), die am Filter (1) angewandt wird, der frei von Partikeln ist, wobei diese beschleunigte Bildung einen Schritt zur Bildung eines Aggregats umfasst, das sich aus Kohlenstoffkernen und aus unverbrannten Kohlenwasserstoffen zusammensetzt, "fette Partikel" genannt, der durch eine Phase der Erhöhung der Anzahl von Kohlenstoffkernen und unverbrannten Kohlenwasserstoffen definiert wird, die vom Motor erzeugt werden, **dadurch gekennzeichnet, dass** die Phase der Erhöhung von unverbrannten Kohlenwasserstoffen in der Auspuffleitung die Aktion des vorübergehenden Kurzschließens eines Oxidationskatalysators umfasst, der sich in Evakuierungsrichtung der Emissionen des Motors vor dem Partikelfilter befindet.

2. Verfahren nach Anspruch 1, **dadurch gekennzeichnet, dass** die beschleunigte Bildung der feinen Schicht (4) von Feststoffpartikeln (2) bei der ersten Verwendung des Filters angewendet wird.

3. Verfahren nach Anspruch 1 oder 2, **dadurch gekennzeichnet, dass** die beschleunigte Bildung der feinen Schicht (4) von Feststoffpartikeln (2) am Filter unmittelbar nach dem Schritt der Regeneration des Filters angewendet wird.

4. Verfahren nach einem der vorherigen Ansprüche, **dadurch gekennzeichnet, dass** die Phase der Erhöhung der Anzahl von Kohlenstoffkernen, die vom Motor erzeugt werden, die eine und/oder die andere der folgenden Aktionen umfasst:
- Durchführung einer Nacheinspritzung von Kraftstoff in die Verbrennungskammer am kalten Motor,
- Erhöhung des Anteils der in den Motor rückgeführten Abgase,
- Herabsetzen des Einspritzbeginns.

5. Verfahren nach einem der vorherigen Ansprüche, **dadurch gekennzeichnet, dass** die Phase der Erhöhung der unverbrannten Kohlenwasserstoffe in der Auspuffleitung die eine und/oder die andere der folgenden Aktionen umfasst:
- Nacheinspritzung von Kraftstoff in den Motor, und
- Herabsetzen der Verbrennung.

6. Verfahren nach einem der vorherigen Ansprüche, **dadurch gekennzeichnet, dass** es einen Schritt zur Kontrolle der Anzahl der Feststoffpartikel umfasst, die nach dem Partikelfilter ausgestoßen werden, durch einen Partikelsensor, der nach dem Partikelfilter positioniert ist, wodurch es möglich wird, die beschleunigte Bildung der positiven Rußschicht auszulösen oder zu stoppen, um einen Mehrverbrauch an Kraftstoff und die Erhöhung der Gefahr der Ölverdünnung zu vermeiden.

## Claims

1. Method for reducing the polluting emissions of an exhaust line of an internal combustion engine of a vehicle, in particular a motor vehicle, provided with a particle filter, comprising a step of filtering solid particles contained in the polluting emissions by the particle filter, with the filter being, during normal operation of the engine, covered with a layer of solid particles, itself allowing for the filtering of the finest solid particles having a beneficial action for the filtering, and after a longer period of operation, with a thicker layer of solid particles driving a back-pressure at the exhaust of the engine which degrades the performance thereof, the method comprising a step of regenerating the filter covered by said "harmful" layer as it is excessively thick, consisting in removing this "harmful" layer entirely, a step for the accelerated formation of the beneficial layer (4) of solid particles (2), implemented on the filter (1) free of any particle, with this accelerated formation comprising a step of forming an aggregate comprised of cores of carbon and of unburned hydrocarbons, referred to as "fatty particle", defined by a phase of increasing the number of cores of carbon and of unburned hydrocarbons produced by the engine, **characterised in that** the phase of increasing unburned hydrocarbons in the exhaust line comprises the action of temporarily short-circuiting an oxidation catalyst located upstream of the particle filter in the direction of the removal of the emissions from the engine.

2. Method according to claim 1, **characterised in that** the accelerated formation of the fine layer (4) of solid particles (2) is implemented during the first use of the filter.

3. Method according to claim 1 or 2, **characterised in that** the accelerated formation of the fine layer (4) of solid particles (2) is implemented on the filter immediately after the step of regenerating the filter.

4. Method according to one of the preceding claims, **characterised in that** the phase of increasing the number of cores of carbon produced by the engine comprises one and/or the other of the following actions:
- carrying out a cold post-injection of fuel in the combustion chamber,
- increasing the quantity of gases recirculated in the engine,
- degrading the injection advance.

5. Method according to one of the preceding claims, **characterised in that** the phase of increasing unburned hydrocarbons in the exhaust line comprise one and/or the other of the following actions:
- post-injecting fuel into the engine, and
- degrading the combustion.

6. Method according to one of the preceding claims, **characterised in that** it comprises a step of controlling the number of solid particles emitted downstream of the particle filter by a particle sensor positioned downstream of the particle filter, making it possible to trigger or to stop the accelerated formation of the beneficial layer of soot, preventing the overconsumption of fuel and the increasing of the risk of diluting the oil.
